# EUROPEAN PATENT SPECIFICATION

(11) **EP 2 185 613 B1**
(45) Date of publication and mention of the grant of the patent: **25.04.2012**
(21) Application number: 08786274.4
(22) Date of filing: 21.07.2008
(51) Int. Cl.: C08F 279/02, C09D 151/00, C08F 257/02, C08F 265/02

(54) **CORE SHELL POLYMER**
KERN-SCHALE-POLYMER
POLYMÈRE COEUR-ÉCORCE

(30) Priority: 30.07.2007 EP 07113447
(43) Date of publication of application: 19.05.2010
(73) Proprietor: BASF SE, 67056 Ludwigshafen (DE)
(72) Inventor: GHOSH, Tamal, Hopewell Junction, NY 12533 (US); ARAUJO, Odair, F-60170 Ribècourt-Dreslincourt (FR); BRETON, Magali, F-60280 Bienville (FR); LEBRETON, Arnaud, F-69006 Lyon (FR); EHLEN, Dominique, F-60200 Compiegne (FR)
(74) Representative: Lux, Berthold
(86) International application number: PCT/EP2008/059494
(87) International publication number: WO 2009/016053

(56) References cited:
- US-A- 4 537 916
- US-A- 5 700 852
- US-A1- 2002 132 055

## Description

Substrates, for example paper or paper board, can be coated with one or more coating layers, which serve as a barrier against water-vapor, moisture, water, oil and/or grease. In particular, paper and paper board used for wrapping, respectively, packaging fatty food such as fried potato, fried chicken or buttery popcorn, is usually coated with at least one coating layer that provides a high oil/grease resistance (OGR).

JP 2004-076189 refers to coated paper which possesses improved oil resistance and which can be used to wrap fatty food. The coated paper can be obtained by coating the paper either with coating composition (I), which is obtained by mixing an acrylic resin, a styrene/butadiene copolymer and a polyester, or with coating composition (II), which is obtained by mixing a polyester with core shell particles comprising an acrylic resin as core and a styrene/butadiene copolymer as shell. The core shell particles are obtained by polymerizing the monomers forming the acrylic resin in the presence of the styrene butadiene copolymer. Example 1 describes a coating composition (I), which is obtained by mixing 15 weight parts polyester with 60 weight parts acrylic resin, which is 70/10/20 (w/w/w) methyl methacrylate/butyl acrylate/styrene copolymer, and 40 weight parts 35/65 (w/w) styrene/butadiene copolymer. The coating compositions of JP 2004-076189 have the disadvantage that three components are needed to achieve the desired effect.

JP 1995-258308 describes latexes comprising core shell polymers. Paper coated with these latexes shows improved surface intensity, blister resistance and wet strength. The core of the core shell polymer comprises a copolymer having a Tg of below -20 °C, which is formed from a monomer mixture comprising 40 to 64.5% by weight of a conjugated diene monomer, 35 to 59.5% by weight of s hydrophobic monomer and 0.5 to 25% by weight of a hydrophilic monomer, all based on the weight of the monomer mixture. The shell of the core shell polymer comprises a copolymer, which is formed from a monomer mixture comprising 5 to 35% by weight of a conjugated diene monomer, 25 to 40% by weight of a hydrophobic monomer, 25 to 70% by weight of a hydrophilic monomer comprising at least one member selected from unsaturated (a) carboxylic acid monomer, (b) hydroxy ester monomer and (c) amide monomer, and other hydrophilic monomers, all based on the weight of the monomer mixture. It was no object of JP 1995-258308 to provide coated paper showing an improved oil/grease resistance (OGR).

JP 2005-089895 describes latexes comprising polymeric particles. When a mixture of these latexes with wax is coated onto paper, it forms a barrier against moisture. The coated papers are also said to show no blocking and to be recyclable. The polymeric particles of the latexes consist of a core, a first shell and a second shell, wherein the core consists of a copolymer having a Tg of -90 to 10 °C, the first shell consists of a copolymer having a Tg of 0 to 180 °C and the second shell consists of a copolymer having a Tg of 0 to 50 °C, and wherein the Tg of the copolymer of the first shell is at least 4°C higher than the Tg of the copolymer of the second shell, and the Tg of the copolymers of the first and second shell are both higher than the Tg of the copolymer of the core. For example, latex D is described, which contain polymeric particles having a particle size of 120 nm and which polymeric particles consist of a core, a first shell and a second shell in a weight ratio of 30/10/60, wherein the core consists of a 63/37 (w/w) styrene/butadiene copolymer having a Tg of 7 °C, the first shell consists of a 80/20 (w/w) styrene/2-ethylhexyl acrylate copolymer having a Tg of 69 °C and the second shell consists of a 60/37/3 (w/w/w) styrene/2-ethylhexyl acrylate/acrylic acid copolymer having a Tg of 32 °C. We measured the gel content of the styrene/butadiene copolymer of the core of the polymeric particles of latex D and found it to be 68%. Another example is latex a, which contains polymeric particles having a particle size of 119 nm and which polymeric particles consist of a core, a first shell and a second shell in a weight ratio of 30/10/60, wherein the core consists of a 67/33 (w/w) styrene/butadiene copolymer having a Tg of 15 °C, the first shell consists of a 80/20 (w/w) styrene/2-ethylhexyl acrylate copolymer having a Tg of 69 °C and the second shell consists of a 60/37/3 (w/w/w) styrene/2-ethylhexyl acrylate/acrylic acid copolymer having a Tg of 31 °C. We measured the gel content of the styrene/butadiene copolymer of the core of the polymeric particles of latex a and found it to be 64%. It was also no object of JP 2005-089895 to provide coated paper showing an improved oil/grease resistance (OGR).

It is the object of the present invention to provide a method for imparting increased oil/grease resistance to substrates coated with a coating layer. In addition, the coated substrates shall be resistant towards blocking.

This object is solved by the core shell polymer of claim 1, the coating composition of claim 6, the processes of claims 7 and 8, and the method for imparting increased oil/grease resistance to a substrate by coating the substrate with coating composition of claim 6.

The core shell polymer of the present invention comprises (i) a core comprising a polymer having a Tg in the range of from -15 to 35 °C, which polymer is formed from a monomer mixture comprising at least one conjugate diene monomer and (ii) a shell comprising a polymer having a Tg in the range of from 60 to 180 °C, which polymer is formed from a monomer mixture comprising at least one aromatic vinyl monomer, wherein the gel content of the core polymer is below 62%, wherein the monomer mixture that forms the core polymer further comprises at least one aromatic vinyl monomer.

The Tg (glass transition temperature) is the temperature, below which the physical properties of amorphous materials vary in a manner similar to those of a crystalline phase (glassy state) and above which amorphous materials behave like liquids (rubbery state). The Tg is also the temperature below which molecules have little relative mobility.

The Tg is measured of the dry core shell polymer using a Differential Scanning calorimeter (DSC) applying the following thermal cycle: 1) temperature increase from -60 to 120 °C at a rate of 20 °C/min, 2) temperature decrease from 120 °C to 60 °C at a rate of 20 °C/min and 3) temperature increase again from -60°C to 120 °C at a rate of 20 °C/min and measurement of the Tg.

The gel content refers to the weight ratio of the chloroform insoluble fraction of the core shell polymer/core shell polymer.

The gel content is determined as follows: fiber glass papers (2.5 x 11 cm) having a determined weight (P0) are dipped in a 25% by weight aqueous emulsion of core/shell polymer adjusted to pH 8 and dried at 50 °C for 2 h. The dry weight of the coated fiber glass papers (P1) is determined. The coated fiber glass papers are placed in a Soxhlet apparatus and extracted with chloroform for 7 hours. The extracted fiber glass papers are removed and dried at 105 °C for 2 hours. The dry weight of the extracted fiber glass papers (P2) is determined. The gel content [%] is calculated as follows: (P2-P0)/(P1-P0) x 100.

Preferably the lower limit of the Tg of the core polymer is at least -5 °C, more preferably at least 0 °C, even more preferably at least 5 °C, and most preferably, at least 8 °C.

Preferably, the upper limit of the Tg of the core polymer is at most 30 °C, more preferably at most 25 °C, even more preferably at most 20 °C and most preferably at most 15 °C.

Preferably, the Tg of the core polymer is in the range of from -5 to 30 °C, more preferably, it is in the range of from 0 to 25 °C, even more preferably, it is in the range of from 5 to 20 °C and most preferably, it is in the range of from 8 to 15 °C.

The gel content of the core polymer is preferably below 60%, more preferably below 55% and most preferably below 50%. Preferably, the gel content has a lower limit which is at least 10%, more preferably, at least 20%, most preferably, at least 25%.

Examples of conjugated diene monomers are butadiene, isoprene, 2-methyl-1,3-butadiene, 2,3-dimethyl-1,3-butadiene, 2-ethyl-1,3-butadiene, 1,3-pentadiene, chloroprene and 2-chloro-1-3-butadiene. A preferred conjugated diene is butadiene.

The amount of the conjugated diene monomer (or mixtures thereof) in the monomer mixture that forms the core polymer is preferably at most 60%, more preferably at most 55%, even more preferably at most 50% and most preferably at most 45% by weight based on the weight of the monomer mixture that forms the core polymer. Preferably, the amount of the conjugated diene is at least 1% by weight, more preferably at least 10% by weight, even more preferably at least 20% by weight and most preferably least 30% by weight based on the weight of the monomer mixture that forms the core polymer.

The amount of conjugated diene monomer (or mixtures thereof) in the monomer mixture that forms the core polymer is preferably at in the range of 1 to 60%, more preferably in the range of 10 to 55%, even more preferably in the range of 20 to 50% and most preferably in the range of 30 to 45% by weight based on the weight of the monomer mixture that forms the core polymer.

The monomer mixture that forms the core polymer preferably comprises further ethylenically unsaturated monomers. Examples of further ethylenically unsaturated monomers are aromatic vinyl monomers, α, β-unsaturated carboxylic acids and salts thereof, derivatives of α, β-unsaturated carboxylic acids, aliphatic vinyl monomers and olefin monomers. Examples of aromatic vinyl monomers are styrene, o-methylstyrene, m-methylstyren, p-methylstyrene, o-ethylstyrene and o-hydroxymethylstyrene and mixtures thereof. Styrene is a preferred aromatic vinyl monomer.

Examples of α, β-unsaturated carboxylic acids are acrylic acid, methacrylic acid, fumaric acid, itaconic acid, maleic aciod, crotonic acid and monoethyl maleate and mixtures thereof. Preferred examples of α, β-unsaturated carboxylic acids are acrylic acid, fumaric acid and itaconic acid and mixtures thereof. Salts thereof can be sodium or ammonium salts.

Examples of derivatives of α, β-unsaturated carboxylic acids are methyl (meth)acrylate, ethyl (meth)acrylate, 2-ethylhexyl (meth)acrylate, (meth)acrylamide, (meth)acrylonitrile, maleimide and maleic anhydride and mixtures thereof.

Examples of aliphatic vinyl monomers are vinyl alcohol, vinyl chloride, vinylidene chloride, vinyl isobutyl ether and vinyl acetate and mixtures thereof.

Examples of olefin monomers are ethylene, propylene, butadiene and isoprene and chlorinated and fluorinated derivatives thereof such as tetrafluroethylene and mixtures thereof.

The monomer mixture that forms the core polymer further comprises at least one aromatic vinyl monomer.

The monomer mixture that forms the core polymer most preferably further comprises at least one aromatic vinyl monomer and at least one α, β-unsaturated carboxylic acid.

The amount of the aromatic vinyl monomer (or mixtures thereof) in the monomer mixture that forms the core polymer is preferably in the range of 10 to 90%, more preferably in the range of 40 to 80% and most preferably in the range of 50 to 70% by weight based on the weight of the monomer mixture that forms the core polymer.

The amount of the α, β-unsaturated carboxylic acid (or mixtures thereof) in the monomer mixture that forms the copolymer of the core is preferably in the range of 0.1 to 50%, more preferably in the range of 0.2 to 10% and most preferably in the range of 0.5 to 5% by weight based on the weight of the monomer mixture that forms the core polymer.

Preferably, the monomer mixture used to form the core polymer does not contain ethylenically unsaturated monomers carrying cyano groups such as (meth)acrylonitrile.

Preferably the upper limit of the Tg of the shell polymer is at least 70 °C, and most preferably, at least 80 °C.

The Tg of the shell polymer is at most 180 °C.

Preferably, the Tg of the shell polymer is in the range of 80 to 180 °C.

Preferably, the gel content of the shell polymer is below 20%, more preferably it is below 10% and most preferably it is 0%.

Examples of aromatic vinyl monomers are listed above. The preferred aromatic vinyl monomer used to form the shell polymer is styrene.

The amount of aromatic vinyl monomer (or mixtures thereof) in the monomer mixture that forms the shell polymer is preferably least 50% by weight, more preferably at least 70% by weight, even more preferably at least 80% by weight and most preferably least 90% by weight based on the weight of the monomer mixture used to form the shell polymer.

The monomer mixture that forms the shell polymer can also comprise further ethylenically unsaturated monomers. Examples of further ethylenically unsaturated monomers are aromatic vinyl monomers, α, β-unsaturated carboxylic acids and salts thereof, derivatives of α, β-unsaturated carboxylic acids, aliphatic vinyl monomers and olefin monomers.

The weight ratio of the core polymer/shell polymer is preferably in the range of from 30/70 to 95/5, more preferably from 50/50 to 90/10, even more preferably from 55/45 to 85/15 and most preferably from 60/40 to 80/20.

The average particle size of the core shell polymer is preferably between 100 and 150 nm.

Preferably, the core shell polymer does not contain a polyester.

Polyesters can be polymers formed from at least one monomer having a hydroxy as well as a carboxy group or from at least one monomer having two hydroxy groups and at least one monomer having two carboxy groups or a lactone group. An example of a monomer having a hydroxy as well as a carboxy group is adipic acid. An example of a diol is ethylene glycol. An example of a monomer having a lactone group is carprolactone. Examples of dicarboxylic acids are terephthalic acid, isophthalic acid and 1,4-naphthalenedicarboxylic acid. An example of a polyester is polyethylene terephthalate (PET). So-called alkyd resins can also be regarded to belong to polyester polymers.

The coating composition of the present invention comprises a core shell polymer as described above and an aqueous medium.

The information given above for the core shell polymer applies also to the core shell polymer of the coating composition of the present invention.

Preferably, the coating composition does not contain a polyester.

The coating composition of the present invention is in particular a paper or paper board coating composition.

The pH of the coating composition is preferably in the range of from 5 to 10, more preferably of from 6 to 8, most preferably of from 7 to 8.

The coating composition preferably comprises from 1 to 90% by weight of the core shell polymer, more preferably from 10 to 70% by weight, even more preferably from 25 to 60% by weight and most preferably from 35 to 50% by weight, based on the weight of the coating composition.

The viscosity of the coating composition is preferably in the range of 50 to 1000 mPa x s (Brookfield 20 rpm, 25 °C), more preferably in the range of 100 to 500 mPa x s.

Preferably, the aqueous medium is water.

Also part of the present invention is a first process for preparing the coating composition of the present invention, which process comprises the steps of
i) providing an aqueous medium
ii) feeding the monomer mixture, that forms the core polymer, to the aqueous medium of step i) and allowing the monomer mixture to polymerize in the presence of an initiator to form the core polymer, and
iii) feeding the monomer mixture, that forms the shell polymer to the core polymer of step ii) and allowing the monomer mixture to polymerize in the presence of an initiator to form the coating composition of the present invention.

The aqueous medium of step i) may comprise a seed polymer. The seed polymer can be any kind of suitable seed polymer. Preferably, the seed polymer is polystyrene. Preferably the seed polymer has an average particle size in the range of 10 to 50 nm.

It is possible that a small part, for example at most 10%, preferably at most 5%, more preferably at most 2% by weight of the monomers of the monomer mixture that forms the core polymer based on the weight of the monomer mixture that forms the core polymer is also present in step i).

Any suitable initiator can be used. The initiator can be, for example, a peroxide, a persulfate, an azo compound or a redox couple or mixtures thereof.

Examples of peroxides are hydrogen peroxide, ammonium, sodium or potassium peroxide, tert-butyl peroxide, tert-butyl hydroperoxide, cumene hydroperoxide and benzoyl peroxide. Examples of persulfates are ammonium, sodium or potassium persulfate. Examples of azo compounds are 2,2-azobisisobutyronitrile and 4,4'-azobis(4-cyanovaleric acid). Redox couples consist of an oxidizing agent and a reducing agent. The oxidizing agent can be one of the above listed peroxides, persulfates or azo compounds, or a sodium or potassium chlorate or bromate. Examples of reducing agents are ascorbic acid, glucose or ammonium, sodium or potassium hydrogen sulfite, sulfite, thiosulfate or sulfide, or ferrous ammonium sulfate.

Preferably, the initiator is a persulfate, more preferably it is ammonium persulfate.

The polymerization of the monomer mixtures in steps ii) and iii) can be performed in the presence of further additives such as surfactants, chain transfer agents and chelating agents, e.g. in the presence of a surfactant and a chain transfer agent.

The further additives can either already be present in step i) and/or are fed together with the monomer mixtures and/or in separate feeds in steps ii) and/or iii).

An example of a surfactant is disodium dodecyl diphenyl oxide, disulfonate.

Examples of chain transfer agents are α-methylstyrene dimer, thioglycolic acid, sodium hypophosphite, 2-mercaptoethanol, *N*-dodecyl mercaptan and *tert*-dodecyl mercaptan. A preferred chain transfer agent is *tert*-dodecyl mercaptan.

An example of a chelating agent is ethylenediaminetetraacetic acid.

The amount of surfactant can be 0 to 15%, preferably it is 0.1 to 10%, more preferably 1 to 6%, most preferably 2 to 4% by weight based on the weight of the monomer mixtures of steps ii) and iii).

The amount of chain transfer agent can be 0 to 30%, preferably it is 0.1 to 20%, more preferably 0.2 to 15%, most preferably 0.5 to 10% by weight based on the weight of the monomer mixtures of steps ii) and iii).

Preferably, the polymerization of the monomer mixtures in steps ii) and iii) is performed in the presence a surfactant and a chain transfer agent.

Usually the polymerization of the monomer mixtures in steps ii) and iii) is performed at a temperature between of 50 to 130 °C, more preferably between 60 to 120 °C, most preferably, between 80 to 110 °C.

After step iii) any remaining monomers can be removed, for example by a stripping process.

Also part of the present invention is a second process for preparing the coating composition of the present invention, which process comprises the steps of
i) providing a core polymer
ii) providing a shell polymer, and
iii) mixing the core polymer of step i) and the shell polymer of step ii) in the presence of an aqueous medium.

The core polymer of step i) and the shell polymer of step ii) could be in solid form or in form of a solution, emulsion or suspension in an aqueous medium.

The aqueous medium in step iii) could derive from step i) or ii) or could be added in step iii).

The mixing of the core polymer and of the shell polymer in step iii) is usually carried out at ambient temperature, for example at a temperature between 5 and 45 °C, preferably between 15 and 30 °C.

The core polymer of step i) and the shell polymer of step ii) could be prepared by polymerzing the monomer mixtures that form the core polymer, respectively, the shell polymer in the presence of an initiator.

Preferably, the coating composition of the present invention is prepared using the second process. The invention relates to a coating composition prepared by the second process.

Another part of the present invention is a process for preparing the core shell polymer of the present invention, which process comprises the step of removing the aqueous medium from the coating composition of the present invention.

Another part of the present invention is a process for coating a substrate with the coating composition of the present invention, which process comprises the step of applying the coating composition of the present invention to a substrate.

The substrate can be a two-dimensional object such as a sheet or a film, or any three dimensional object; it can be transparent or opaque. The substrate can be made from paper, cardboard, wood, leather, metal, textiles, glass, ceramics and/or polymers. Preferably, the substrate is paper or paperboard.

The coating composition of the present invention can be applied to the substrate using a standard coating application as such as a bar coater application, rotation application, spray application, curtain application, dip application, air application, knife application, blade application or roll application. The composition can also be applied to the substrate by various printing methods such as silk screen printing, gravure printing, offset printing and flexo printing.

The coating composition applied to the substrate can be dried, for example at ambient or elevated temperature, to form a coating layer.

The coating layer has usually a thickness in the range of 0.1 to 100 µm, Preferably, the thickness is in the range of 1 to 50 µm, more preferably, it is in the range of 1 to 20 µm.

Also part of the present invention is a method of imparting increased oil/grease resistance to a substrate by coating the substrate with the coating composition of the present invention.

Paper and paperboard coated with the coating compositions of the present invention have the advantage of showing a high oil/grease resistance in combination with an excellent blocking behaviour.

Fig 1 describes the results of the Oil Kit Test performed on Ascoflex 40 and M-real board coated with the coating compositions of example 1c, comparative examples 1 and 2 and with Ciba® Latexia ® 302.

Fig 2 and 3 describe the results of the Turpentine Test performed on Ascoflex 40 and M-real board coated with the coating compositions of example 1 c, comparative examples 1 and 2 and with Cuba® LateXia ® 302.

Fig 5 and 4 describe the results of the "Boat" Test performed on Ascoflex 40 and M-real board coated with the coating compositions of example 1c, comparative examples 1 and 2 and with Ciba® Latexia ® 302.

Fig 6 and 7 describe the results of the Blocking Test performed on Ascoflex 40 and M-real board coated with the coating compositions of example 1 c, comparative examples 1 and 2 and with Ciba® Latexia ® 302.

### Examples

### Example 1a

### Preparation of a coating composition comprising a core shell polymer consisting of a styrene/butadiene/fumaric acid/acrylic acid copolymer core and a styrene/acrylic acid copolymer shell

1500 g water, 22.00 g fumaric acid, 13.33 g of a 45% by weight solution of disodium dodecyl diphenyl oxide, disulfonate, 0.80 g ethylenediaminetetraacetic acid and 67.11 g of a 30% by weight aqueous suspension of polystyrene seed particles with an average particle size of 30 nm, are charged to a reactor and agitated at a speed of 360 rpm. The mixture is heated to 90 °C and degassed with nitrogen. A first feed consisting of 1394.23 g styrene, 50.57 g acrylic acid and 140.0 g α -methylstyrene dimer is fed into the reactor within 4 hours and 25 minutes at a speed of 4.80 g/min from To to T_{45 min}, 7.20 g/min from T_{45 min} to T_{145 min}, and 5.40 g/min from T_{145 min} to T_{265 min}. A second feed consisting of 518.00 g butadiene is fed into the reactor within 2 hour and 25 minutes at a speed of 2.63 g/min from To to T₄₅ min and 4.00 g/min from T_{45 min} to T_{145 min}. A third feed consisting of 40.00 g a 45% by weight solution of disodium dodecyl diphenyl oxide, disulfonate, 0.80 g sodium hydroxide pellets and 177.00 g water and a fourth feed consisting of 173.00 g water and 23.60 g ammonium persulfate are fed in parallel into the reactor within 5 hours and 25 minutes starting at To at a continuous speed.

After 4 hours (T₂₄₀ₘᵢₙ) the temperature is increased from 90 °C to 100 °C within 30 minutes and kept at 100 °C until completion of the third and fourth feed. After completion of the feeds, volatile organic compounds including the remaining monomers are removed from the reaction mixture by a stripping process under vacuum and direct steam flow.

The obtained coating composition is filtered to remove the grids, and adjusted to a solid content of about 44.9% (w/w), a pH of 5.9 and a viscosity at 25 °C (Brookfield 20 rpm) of 376 mPa x s. The obtained coating composition is an aqueous suspension of a core shell polymer having an average particle size of 114 nm and consisting of about 70 weight parts 60.3/38.0/1.6/0.1 (w/w/w/w) styrene/butadiene/fumaric acid/acrylic acid copolymer having a Tg of about 4 °C and a gel content of about 60%, which functions as the core polymer, and about 30 weight parts (94/4) (w/w) styrene/acrylic acid copolymer having a Tg of about 89 °C, which functions as the shell polymer.

### Example 1b

### Preparation of a coating composition comprising a core shell polymer consisting of a styrene/butadiene/fumaric acid/acrylic acid copolymer core and a styrene/acrylic acid copolymer shell

A core shell polymer is prepared in analogy to the core shell polymer of example 1a, except that 7.56 g (instead of 13.33 g) of the 45% by weight solution of disodium dodecyl diphenyl oxide, disulfonate is used in the initial reactor charge and 19.51 g (instead of 40.00 g) of the 45% by weight solution of disodium dodecyl diphenyl oxide, disulfonate is used in the third feed.

The obtained coating composition is filtered to remove the grids, and adjusted to a solid content of about 46.2% (w/w), a pH of 5.8 and a viscosity at 25 °C (Brookfield 20 rpm) of 132 mPa x s. The obtained coating composition is an aqueous suspension of a core shell polymer having an average particle size of 140 nm and consisting of about 70 weight parts 60.3/38.0/1.6/0.1 (w/w/w/w) styrene/butadiene/fumaric acid/acrylic acid copolymer having a Tg of about 15 °C and a gel content of about 52%, which functions as the core polymer, and about 30 weight parts (94/4) (w/w) styrene/acrylic acid copolymer having a Tg of about 100 °C, which functions as the shell polymer.

### Example 1c

### Preparation of a coating composition comprising a core shell polymer consisting of a styrene/butadiene/acrylic acid/fumaric acid/itaconic acid copolymer core and a styrene/acrylic resin shell

1'500 g water, 6.0 g itaconic acid, 16.00 g fumaric acid, 13.33 g of a 45% by weight solution of disodium dodecyl diphenyl oxide, disulfonate, 0.88 g ethylenediaminetetraacetic acid and 67.11 g of a 30% by weight aqueous suspension of polystyrene seed particles with an average particle size of 30 nm, are charged to a reactor at 20 °C and the obtained mixture is agitated at a speed of 360 rpm. The mixture is heated to 85 °C and degassed with nitrogen. A first feed consisting of 42.60 g acrylic acid, 1'180.00 g styrene and 38.00 g tert-dodecyl mercaptan, a second feed consisting of and a second feed consisting of 740.0 g butadiene are fed in parallel into the reactor within 4 hours and 30 minutes starting from To. A third feed consisting of 42.22 g of a 45% by weight solution of disodium dodecyl diphenyl oxide, disulfonate, 0.8 g sodium hydroxide pastilles and 170 g water and a fourth feed consisting of 23.60 g ammonium persulfate and 180.00 g water are fed into the reactor in parallel within 6 hours starting from To. After 4 hours the temperature is increased from 85 °C to 100 °C in 30 minutes and kept at 100 °C until completion of the third and fourth feed. After completion of the feeds, volatile organic compounds including the remaining monomers are removed from the reaction mixture by a stripping process under vacuum and direct steam flow. The obtained aqueous suspension of the styrene/butadiene/acrylic acid/fumaric acid/itaconic acid (59.5/37.3/2.1/0.8/0.3) copolymer is filtered to remove the grids, and adjusted to a viscosity at 25 °C (Brookfield 20 rpm) of about 350 mPa x s, pH of 7 to 8 and a solid content of about 50% (w/w). The styrene butadiene acrylic acid copolymer has an average particle size of 111 nm, a gel content of 60% and a Tg of about 10 °C.

2'412.00 g Joncryl® DFC 3024 sold by BASF, which is a 32% by weight aqueous solution of a styrene/acrylic resin having a molecular weight of 8'500 g/mol, an acid number of 222 and a Tg of about 101 °C, is added to the aqueous suspension of the styrene/butadiene/acrylic acid/fumaric acid/itaconic acid copolymer within 3 hours at 40 °C.

The obtained coating composition is an aqueous suspension of a core shell polymer having an average particle size of about 120 nm and consisting of about 72 weight parts 59.5/37.3/2.1/0.8/0.3 (w/w/w/w) styrene/butadiene/acrylic acid/fumaric acid/itaconic acid having a Tg of about 10 °C and a gel content of about 60%, which functions as the core polymer, and about 28 weight parts styrene/acrylic resin having a molecular weight of about 8'500 g/mol, an acid number of 222 and a Tg of about 101 °C, which functions as the shell polymer. The coating composition has a solid content of about 43.6% (w/w), a pH of 7.9 and a viscosity at 25 °C (Brookfield 20 rpm) of 224 mPa x s.

### Comparative example 1

### Preparation of a coating composition comprising a core shell polymer consisting of a styrene/2-ethylhexyl acrylate copolymer core and a styrene/acrylic acid, ammonium salt copolymer shell

Butyl acetate (250 g) is charged to a reactor and heated to reflux (125 °C). *tert*-Butyl perbenzoate (7.8 g) is added to the reactor. A monomer feed consisting of styrene (162.5 g) and glacial acrylic acid (87.5 g) is prepared. An initiator feed consisting of *tert*-butyl-perbenzoate (23.4 g) is prepared. The monomer feed is added to the reactor within 5 hours and the initiator feed is added to the reactor within 5.5 hours. Once the feeds are completed, the reaction mixture is held for a further 1 hour at 125 °C. A mixture of 20% by weight aqueous ammonia (100 g) and water (700 g) is added to the reactor whilst distilling off butyl acetate. The distillate is split and the water returned to the reactor and the butyl acetate to the receiver. The temperature of the reaction mixture falls to 93 °C during distillation and rises to 100 °C when all the butyl acetate has been removed. When distillation is complete, the reaction mixture is cooled to below 40 °C, the obtained solution of 65/35 (w/w) styrene/acrylic acid, ammonium salt is adjusted to 25% by weight solid content and pH 9.0.

The 25% by weight aqueous solution of styrene/acrylic acid, ammonium salt copolymer (576 g) and water (71 g) is charged to a reactor, heated to 85 °C and degassed with nitrogen for 30 minutes. Ammonium persulfate (0.5 g) is added. A monomer feed consisting of styrene (184.8 g) and 2-ethylhexyl acrylate (151.2 g) is prepared. An initiator feed consisting of ammonium persulfate (1.5 g) and water (15.0 g) is prepared. The monomer feed is added to the reactor within 3 hours and the initiator feed is added to the reactor within 4 hours. The temperature of the reaction mixture is kept at 85 °C during polymerisation. Once the feeds are completed, the contents is held for a further 1 hour at 85 °C before being cooled to below 40 °C and Acticide® LG, a biocide containing chlorinated and non-chlorinated methyl isothiazolones, (0.9 g) is added.

The obtained coating composition is an aqueous emulsion of of a core shell polymer consisting of about 70 weight parts 55/45 (w/w) styrene/2-ethylhexyl acrylate copolymer having M_{w} of 100'000 g/mol and T_{g} of about 15 °C, which functions as core, and about 30 weight parts 65/35 (w/w) styrene/acrylic acid, ammonium salt copolymer having M_{w} of 8'000 g/mol and T_{g} of about 105 °C, which functions as shell. The coating composition has a solid content of about 46% (w/w), a pH of 8.5 and a viscosity at 25 °C (Brookfield 20 rpm) of 700 mPa x s.

### Comparative example 2

### Preparation of a coating composition which is a mixture of the coating composition of comparative example 1 and a wax

A 80/20 (w/w) mixture of the coating composition of comparative example 1 and "Aquabead 525E", which is commercially available by Micro Powders Inc (USA) and which is an aqueous emulsion of a mixture of refined paraffin wax (CAS No. 63231-60-7) and Carnauba wax (CAS No. 8015-86-9), is prepared by mixing the two components. The obtained coating composition has a solid content of approximately 40% (w/w), a pH of 8.5 to 9.5 and a viscosity at 25 °C (Brookfield 20 rpm) of 50 to 300 mPa x s.

### Example 2

### Preparation of Ascoflex 40 and M-real board coated with the coating composition of example 1c

Acoflex is paper having a basis weight of 40 g/m² and coated on one side with a pigmented coating. M-read board is a paperboard having a basis weight of 255 g/m2 and coated on one side with a pigmented coating. The sides of Ascoflex 40, respectively, M-real board, which are not coated with the pigmented coating, are coated with coating composition of example 1c using a Hand Draw Down Coater and dried using a contact-less laboratory web drier, infrared and hot air to yield a coating having a coat weight of 8 g/m².

For comparison, Ascoflex 40 and M-real board are also coated with the coating compositions of comparative examples 1 and 2 and with Ciba® Latexia® 302, which is an aqueous suspension of a carboxylated styrene butadiene copolymer having a solid content of 50% (w/w) and a pH of 5.5, which is adjusted to 7.8.

### Testing of Ascoflex 40 and M-real board coated with the coating composition of examples 1c and coated with the controls

The Ascoflex 40 and M-real board coated with the coating composition of example 1 c and the controls are subjected to the following paper tests:

**Oli-Kit Test** (TAPPI Method 441). The Oil-Kit Test measures the oil resistance of paper or paperboard. 12 mixture of varying amounts of custor oil, heptane and toluene are prepared (mixture number 1 being the less agressive, mixture number 12 being the most aggressive). Paper is treated for 15 seconds with the mixtures and the mixture with the highest number that does not cause an oil stain on the treated paper is determined. A high Oil kit Test value correlates to a high oil resistance of the paper.

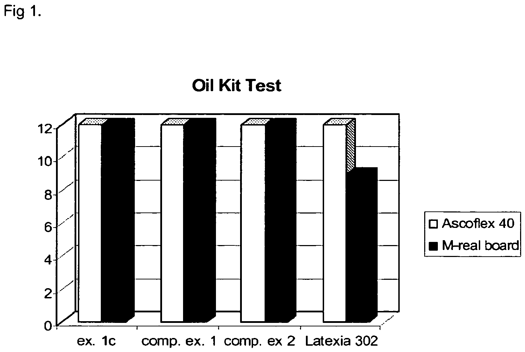

The results are show in Fig 1. It can be seen that Ascoflex 40 and M-real board coated with either the coating composition of example 1 c or with the control coating compositions all show the highest Oil Kit Value of 12 (exception: M-read board coated with Ciba® Latexia® 302 shows an Oil Kit value of around 9).

**Turpentine Test** (TAPPI Method T454). The Turpentine Test measures the resistance of paper or paperboard towards turpentine oil. Sand is placed on the top of the coated paper (flat or folded) and the sand covered paper is placed on the top of a blotting paper. Then, red-dyed turpentine oil is dropped into the sand. The time needed for the red-dyed oil to penetrate through the paper onto the blotting paper is determined. A long time needed for the oil to penetrate through the paper correlates to a high oil resistance of the paper.

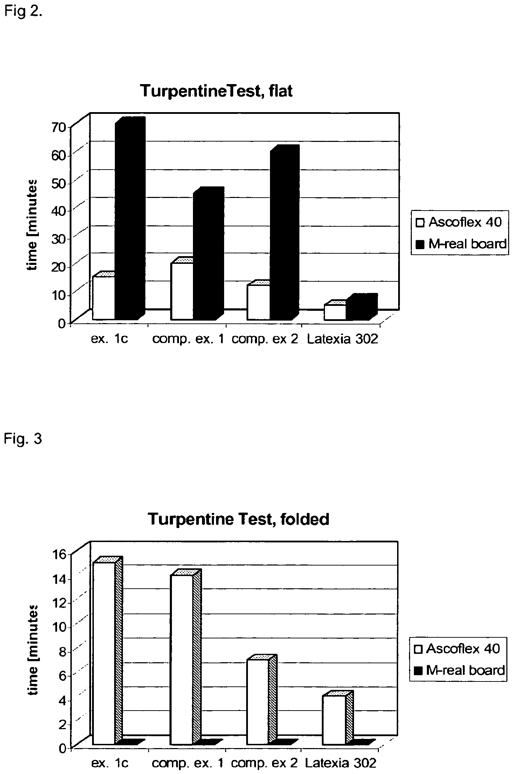

The results are shown in Fig. 2 (flat) and Fig. 3 (folded).

In Fig. 2 it can be seen that the time needed for the red-dyed oil to penetrate through M-real board coated with the coating composition of example 1c is much longer than the time needed to penetrate M-real board coated with the control coating compositions. The time needed for the red-dyed oil to penetrate through Ascoflex 40 coated with the coating composition of example 1 c is comparable to the time needed to penetrate Ascoflex 40 coated with the coating composition of comparative examples 1 and 2 and longer than the time needed to penetrate Ascoflex 40 coated with Ciba® Latexia® 302.

In Fig 3 it can be seen that the time needed for the red-dyed oil to penetrate through Ascoflex 40 coated with the coating composition of example 1c is much longer compared to the time needed to penetrate Ascoflex 40 coated with the control coating compositions.

**Boat Test.** The Boat test measures the resistance of paper or paperboard towards corn oil. A square of paper is folded 1 cm from each side to look like a "boat". A drop of corn oil (containing 1% of a red-dyed oil) is added either to the surface or to an edge of the paper. The time needed for the oil to penetrate the paper is recorded. A long time needed for the oil to penetrate through the paper correlates to a high oil resistance of the paper.

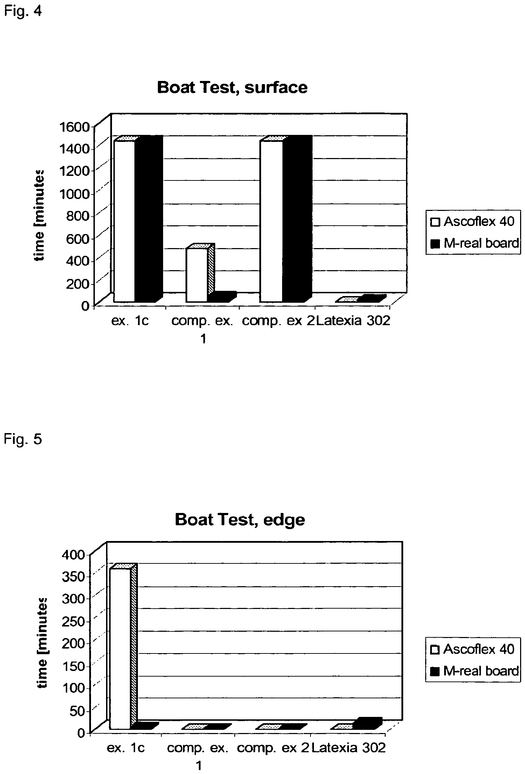

The results are shown in Fig 4 (surface) and Fig. 5 (edge).

In Fig. 4 it can be seen that the time needed for the red-dyed oil to penetrate through M-real board, respectively, Asccoflex 40 coated with the coating composition of example 1c is comparable to the time needed to penetrate M-real board, respectively, Ascoflex 40, coated with the coating composition of comparative example 2 and much longer than the time needed to penetrate M-real board, respectively, Ascoflex 40 coated with the coating composition of comparative example 1 or with Ciba® Latexia ® 302.

In Fig 5 it can be seen that the time needed for the red-dyed oil to penetrate through Ascoflex 40 coated with the coating composition of example 1c is much longer than the time needed to penetrate Ascoflex 40 coated with the control coating compositions.

**Blocking Test** (ASTM D918-99). The Blocking Test measures the blocking behaviour of paper and paper board. Two sheets of paper are placed on top of each other (either face to face or face to back) and a pressure of 3.4 kPa is applied to the two papers at 60 °C. After the treatment, the sticking of the papers to each other is determined and ranked from 0 to 3. 0 means no sticking and good blocking. 3 means complete sticking and bad blocking.

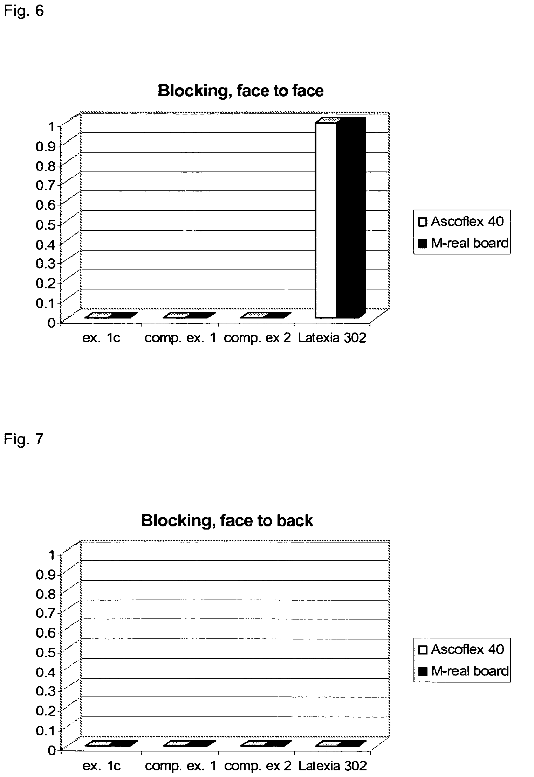

The results are shown in Fig 6 (face to face) and Fig 7 (face to back).

As can be seen in Fig 6 and Fig 7, Ascoflex 40 and M-real board coated with the coating composition of example 1 c shows no blocking at all.

## Claims

1. A core shell polymer comprising (i) a core comprising a polymer having a Tg in the range of from -15 to 35 °C, which polymer is formed from a monomer mixture comprising at least one conjugated diene monomer and (ii) a shell comprising a polymer having a Tg in the range of from 60 to 180 °C, which polymer is formed from a monomer mixture comprising at least one aromatic vinyl monomer, wherein the gel content of the core polymer is below 62%, and wherein the monomer mixture that forms the core polymer further comprises at least one aromatic vinyl monomer.

2. The core shell polymer of claim 1, wherein the amount of the conjugated diene monomer (or mixtures thereof) in the monomer mixture that forms the core polymer is at most 60%.

3. The core shell polymer of claim 1, wherein the monomer mixture that forms the core polymer further comprises at least one α, β-unsaturated carboxylic acid.

4. The core shell polymer of any of claims 1 to 3, wherein the gel content of the shell polymer is below 20%.

5. The core shell polymer of any of claims 1 to 4, wherein the weight ratio of the core polymer/shell polymer is in the range of from 30/70 to 95/5.

6. A coating composition comprising a core shell polymer according to claim 1 and an aqueous medium.

7. A process for preparing the coating composition of claim 6, which process comprises the steps of
i) providing an aqueous medium
ii) feeding the monomer mixture, that forms the core polymer, to the aqueous medium of step i) and allowing the monomer mixture to polymerize in the presence of an initiator to form the core polymer, and
iii) feeding the monomer mixture, that forms the shell polymer to the core polymer of step ii) and allowing the monomer mixture to polymerize in the presence of an initiator to form the coating composition of the present invention.

8. A process for preparing the coating composition of claim 6, which process comprises the steps of
i) providing a core polymer
ii) providing a shell polymer, and
iii) mixing the core polymer of step i) and the shell polymer of step ii) in the presence of an aqueous medium.

9. A method for imparting increased oil/grease resistance to a substrate by coating the substrate with the coating composition of claim 6.

## Patentansprüche

1. Kern-Schale-Polymer, umfassend (i) einen Kern, umfassend ein Polymer mit einer Tg in dem Bereich von -15 bis 35°C, wobei das Polymer aus einem Monomer-Gemisch gebildet ist, umfassend mindestens ein konjugiertes Dien-Monomer und (ii) eine Schale, umfassend ein Polymer mit einer Tg in dem Bereich von 60 bis 180°C, wobei das Polymer aus einem Monomer-Gemisch gebildet ist, umfassend mindestens ein aromatisches Vinyl-Monomer, worin der Gel-Gehalt von dem Kern-Polymer unterhalb 62 % ist, und worin das Monomer-Gemisch, das das Kern-Polymer bildet, weiterhin mindestens ein aromatisches Vinyl-Monomer umfasst.

2. Kern-Schale-Polymer nach Anspruch 1, worin die Menge von dem konjugierten Dien-Monomer (oder Gemische davon) in dem Monomer-Gemisch, das das Kern-Polymer bildet, maximal 60 % ist.

3. Kern-Schale-Polymer nach Anspruch 1, worin das Monomer-Gemisch, das das Kern-Polymer bildet, weiterhin mindestens eine α,β-ungesättigte Carbonsäure umfasst.

4. Kern-Schale-Polymer nach einem der Ansprüche 1 bis 3, worin der Gel-Gehalt von dem Schale-Polymer unterhalb 20 % ist.

5. Kern-Schale-Polymer nach einem der Ansprüche 1 bis 4, worin das Gewichts-Verhältnis von dem Kern-Polymer / Schale-Polymer in dem Bereich von 30 / 70 bis 95 / 5 ist.

6. Beschichtungs-Zusammensetzung bzw. Streich-Mittel, umfassend ein Kern-Schale-Polymer nach Anspruch 1 und ein wässriges Medium.

7. Verfahren zur Herstellung der Beschichtungs-Zusammensetzung bzw. des Streich-Mittels nach Anspruch 6, wobei das Verfahren die Schritte umfasst von
i) Bereitstellen eines wässrigen Mediums,
ii) Zuführen des Monomer-Gemisches, das das Kern-Polymer bildet, zu dem wässrigen Medium von Schritt i) und Ermöglichen, dass das Monomer-Gemisch in Gegenwart von einem Starter polymerisiert, um das Kern-Polymer zu bilden, und
iii) Zuführen des Monomer-Gemisches, das das Schale-Polymer bildet, zu dem Kern-Polymer von Schritt ii) und Ermöglichen, dass das Monomer-Gemisch in Gegenwart von einem Starter polymerisiert, um die Beschichtungs-Zusammensetzung bzw. das Streich-Mittel von der vorliegenden Erfindung zu bilden.

8. Verfahren zur Herstellung der Beschichtungs-Zusammensetzung bzw. des Streich-Mittels nach Anspruch 6, wobei das Verfahren die Schritte umfasst von
i) Bereitstellen eines Kern-Polymers,
ii) Bereitstellen eines Schale-Polymers, und
iii) Vermischen des Kern-Polymers von Schritt i) und des Schale-Polymers von Schritt ii) in Gegenwart von einem wässrigen Medium.

9. Verfahren zum Verleihen erhöhter Öl / Fett-Beständigkeit für ein Substrat durch Beschichten bzw. Bestreichen des Substrats mit der Beschichtungs-Zusammensetzung bzw. dem Streich-Mittel nach Anspruch 6.

## Revendications

1. Polymère noyau-enveloppe comprenant (i) un noyau comprenant un polymère ayant un Tg dans la plage de -15 à 35 °C, ledit polymère étant formé d'un mélange de monomères comprenant au moins un monomère diène conjugué et (ii) une enveloppe comprenant un polymère ayant un Tg dans la plage de 60 à 180 °C, ledit polymère étant formé d'un mélange de monomères comprenant au moins un monomère vinylique aromatique, dans lequel la teneur en gel du polymère de noyau est inférieure à 62 %, et dans lequel le mélange de monomères qui forme le polymère de noyau comprend en outre au moins un monomère vinylique aromatique.

2. Polymère noyau-enveloppe de la revendication 1, dans lequel la quantité du monomère diène conjugué (ou des mélanges de ceux-ci) dans le mélange de monomères qui forme le polymère de noyau est d'au plus 60 %.

3. Polymère noyau-enveloppe de la revendication 1, dans lequel le mélange de monomères qui forme le polymère de noyau comprend en outre au moins un acide carboxylique α,β-insaturé.

4. Polymère noyau-enveloppe de l'une quelconque des revendications 1 à 3, dans lequel la teneur en gel du polymère d'enveloppe est inférieure à 20 %.

5. Polymère noyau-enveloppe de l'une quelconque des revendications 1 à 4, dans lequel le rapport en poids du polymère de noyau/polymère d'enveloppe est dans la plage de 30/70 à 95/5.

6. Composition de revêtement comprenant un polymère de noyau-enveloppe selon la revendication 1 et un milieu aqueux.

7. Procédé pour préparer la composition de revêtement de la revendication 6, ledit procédé comprenant les étapes consistant à
i) produire un milieu aqueux
ii) charger le mélange de monomères, qui forme le polymère de noyau, dans le milieu aqueux de l'étape i) et laisser le mélange de monomères polymériser en présence d'un initiateur pour former le polymère de noyau, et
iii) charger le mélange de monomères, qui forme le polymère d'enveloppe dans le polymère de noyau de l'étape ii) et laisser le mélange de monomères polymériser en présence d'un initiateur pour former la composition de revêtement de la présente invention.

8. Procédé pour préparer la composition de revêtement de la revendication 6, ledit procédé comprend les étapes consistant à
i) produire un polymère de noyau
ii) produire un polymère d'enveloppe, et
iii) mélanger le polymère de noyau de l'étape i) et le polymère d'enveloppe de l'étape ii) en présence d'un milieu aqueux.

9. Procédé pour conférer une résistance augmentée aux huiles/graisses à un substrat en enduisant le substrat avec la composition de revêtement de la revendication 6.
